# EUROPEAN PATENT APPLICATION

(11) **EP 2 039 420 A1**
(43) Date of publication of application: **25.03.2009**
(21) Application number: 07743765.5
(22) Date of filing: 21.05.2007
(51) Int. Cl.: B01J 8/24, B01J 2/00, F16J 15/46

(54) **FLUIDIZED-BED APPARATUS**

(30) Priority: 16.06.2006 JP 2006167921
(71) Applicant: Freund Corporation, Tokyo 163-6034 (JP)
(72) Inventor: ISOBE, Shigemi, Tokyo 163-6034 (JP); YAMANAKA, Kuniaki, Tokyo 163-6034 (JP); UNOSAWA, Kazuomi, Tokyo 163-6034 (JP); TAKEI, Narimichi, Tokyo 163-6034 (JP)
(74) Representative: HOFFMANN EITLE
(86) International application number: PCT/JP2007/060331
(87) International publication number: WO 2007/145051

(57) **Abstract**

Processing vessel (1) is formed by overlaying a filter casing (2), a spray casing (3), a material container (4) and an air supply unit (5). Airtightnesses between respective units are maintained by airtight junctions (61 to 63). In the airtight junction (61), two seal portions (91 and 92) are radially provided, and U-seals (64 and 65) are contained. The U-seals (64 and 65) vertically move within seal grooves (67 and 68) through supply and exhaust of air to/from cylinder chambers (69 and 71), to thereby attain close contact with or detachment from flange (74). During particulate material processing, the airtightness of the seal portion (91) is maintained by the U-seal (64). During processing vessel washing, the airtightness of the seal portion (92) is maintained by the U-seal (65), to thereby prevent exposure thereof. Simultaneously, the U-seal (64) is raised, to thereby attain washing of the seal portion (S1) during the particulate processing.

## Description

### Technical Field

The present invention relates to a fluidized bed apparatus used for granulation, coating, and the like of a particulate material, and more particularly, to a fluidized bed apparatus in which washing of a sealing member provided to an apparatus junction may easily be performed.

### Background Art

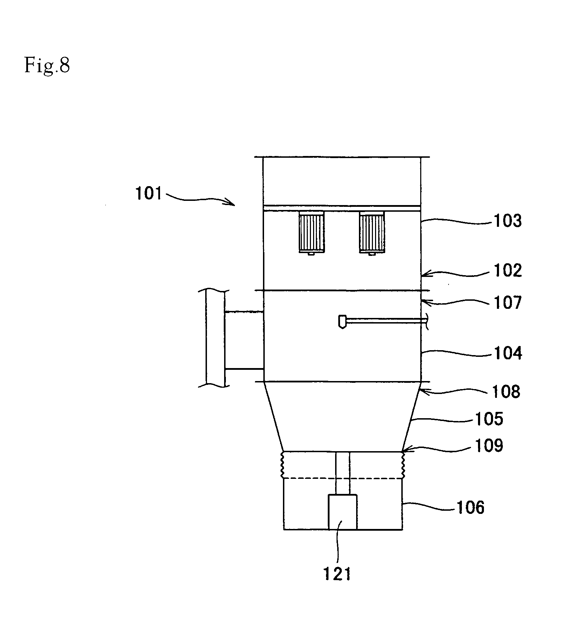

In the fields of medicines, cosmetics, foods, and the like, there is widely used a fluidized bed apparatus having a structure in which a particulate material such as powder or granule is fluidized by means of gas flow to perform processings such as granulation, coating, mixing, agitating, drying, or the like. In the fluidized bed apparatus, a binder solution, a coating solution, or the like is supplied to a fluidized particulate material by means of a spray nozzle to carry out the processings such as granulation and coating. FIG. 8 illustrates a structure of such fluidized bed apparatus described above. As illustrated in FIG. 8, a fluidized bed apparatus 101 includes a cylindrical processing vessel 102, and an object of the processing such as powder is charged into an inside thereof to be subjected to processings such as granulation and coating.

The processing vessel has a shape in which, a filter casing 103, a spray casing 104, a material container 105, and an air supply unit 106 are stacked in the stated order from the top thereof. Between the filter casing 103 and the spray casing 104, between the spray casing 104 and the material container 105, and between the material container 105 and the air supply unit 106 are airtightly engaged, respectively, with airtight junctions 107 to 109 using a ring sealing member. FIGS. 9 to 11 are drawings illustrating structures of the airtight junctions 107 to 109, in which FIG. 9 illustrates the airtight junction 107, FIG. 10 illustrates the airtight junction 108, and FIG. 11 illustrates the airtight junction 109, respectively.

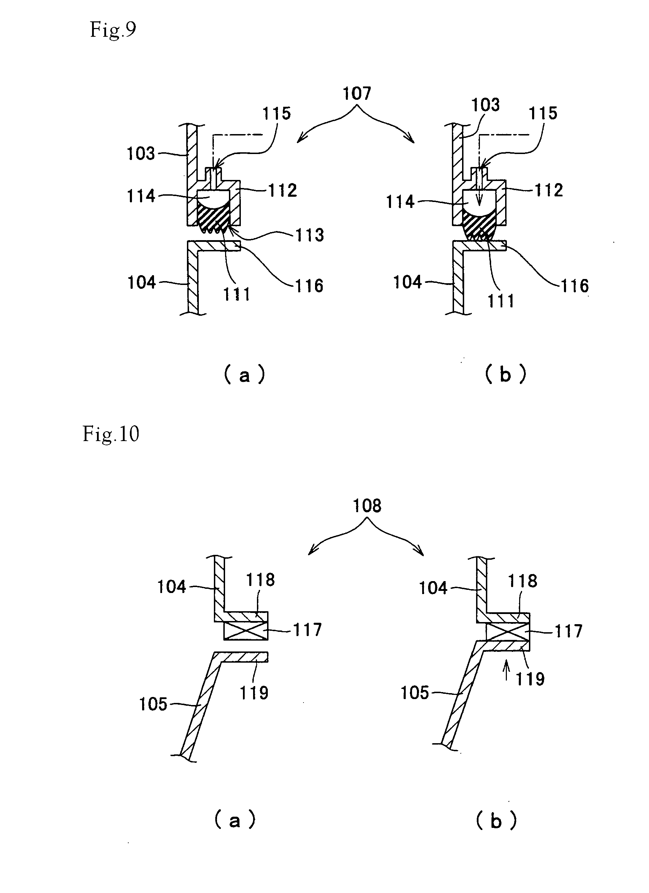

As illustrated in FIG. 9, a U-seal 111 having a substantially U-shape cross-section is used in the airtight junction 107. At an outer periphery of a lower end portion of the filter casing 103, there is formed a seal mounting portion 112 so as to extend in a radial direction, and the U-seal 111 is contained within the seal groove 113 inside the seal mounting portion 112. Within the seal groove 113, a cylinder chamber 114 is formed at a rear of the U-seal 111, and compressed air is supplied to the cylinder chamber 114 through an air supply port 115 from a supply and exhaust means (not shown). As illustrated in FIGS. 9(a) and 9(b), if the compressed air is supplied to the cylinder chamber 114, the U-seal 111 is caused to protrude from the lower end portion of the seal groove 113 downwardly by a pressing force of the compressed air.

On the other hand, at an outer periphery of an upper end of the spray casing 104, there is formed a flange 116 so as to extend toward the radial direction. The flange 116 is arranged so that a top surface of the flange 116 faces a lower end surface of the seal mounting portion 112. As illustrated in FIG. 9(b), when the compressed air is supplied to the cylinder chamber 114 to cause the U-seal 111 protrude from the seal groove 113, the lower end of the U-seal 111 abuts against the top surface of the flange 116. With this structure, the airtight junction 107 is laid in an airtight state, and the sealing between the filter casing 103 and the spray casing 104 is attained.

Next, as illustrated in FIG. 10, a silicone sponge packing 117 (hereinafter, abbreviated as "packing 117") having a square cross section is used in the airtight junction 108. On an outer periphery of a lower end portion of the spray casing 104, there is formed a flange 118 so as to extend toward a radial direction. Contrary to this, also on an outer periphery of an upper end of the material container 105, there is extendingly formed a flange 119, while facing the flange 118. The packing 117 is disposed between those flanges 118 and 119. The material container 105 is adapted to be pushed up by an actuator 121 formed on the air supply unit 106 side. As illustrated in FIGS. 10(a) and 10(b), when the material container 105 is pushed up, the packing 117 is sandwiched between the flanges 118 and 119. With this, the airtight junction 108 is laid in an airtight state, and a seal is effected between the spray casing 104 and the material container 105.

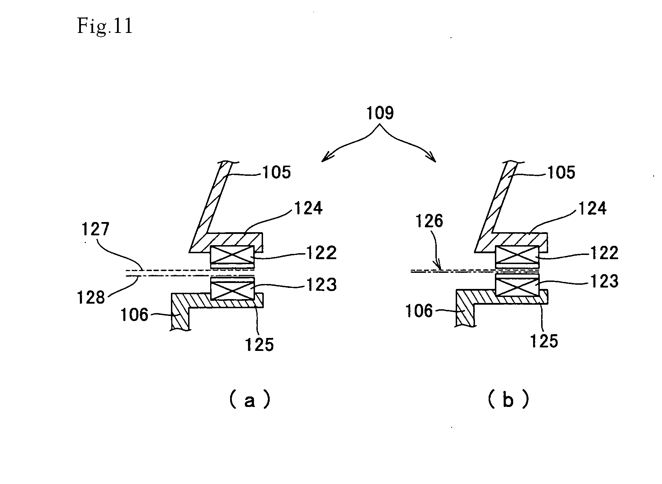

Further, as illustrated in FIG. 11, silicone sponge packings 122 and 123 (hereinafter, abbreviated as "packings 122 and 123") each having a square cross section are used in the airtight junction 109. On an outer periphery of a lower end portion of the material container 105, there is extendingly formed a flange 124, and the packing 122 is fitted onto the lower end side of the flange 124. Contrary to this, also on an outer periphery of an upper end of the air supply unit 106, there is extendingly formed a flange 125, while facing the flange 124, and the packing 123 is fitted onto the top surface side of the flange 124. On the other hand, an air permeable perforated plate 126 is installed between the material container 105 and the air supply unit 106. The perforated plate 126 is constructed of a porous plate 127 formed of a wire mesh, or the like, and a reinforcing plate 128 for retaining the porous plate 127. Then, as illustrated in FIGS. 11(a) and (b), when the material container 105 is pushed up by the actuator 121, the flanges 124 and 125 approaches with each other, and the both packings 122 and 123 are brought into close contact with each other while sandwiching the perforated plate 126 and the reinforcing plate 127. With this, the airtight junction 109 is laid in the airtight state, and a seal is effected between the material container 105 and the air supply unit 106.
Patent Document 1: JP 2004-244205 A
Patent Document 2: JP 2004-500979 A
Patent Document 3: JP 07-158738 A
Patent Document 4: JP 2000-506962 A
Patent Document 5: JP 2003-520744 A
Patent Document 6: JP 2004-509755 A
Patent Document 7: JP 2005-291496 A

### Disclosure of the Invention

### Problems to be solved by the Invention

On the other hand, in the fluidized bed apparatus 101 descried above, in a case of changing kinds of particulate materials, for instance, it is necessary to wash an inside of the fluidized bed apparatus 101 appropriately also from the view point of good manufacturing practice (GMP). Various methods have conventionally been used in washing treatment of the apparatus, such as a water reserving wash in which washing liquid is reserved within the processing vessel 102, or a jet washing in which the washing liquid is jetted from a washing nozzle installed in the fluidized bed apparatus 101. In recent years, however, in order to reduce number of washing steps, automation of the washing steps is promoted. For example, in a case of the above-mentioned jet washing, after taking out products from the processing vessel 102, the washing nozzle is activated through one switching operation, and while appropriately moving, the washing is effected within the processing vessel 102 for a given period of time. With this structure, compared to a conventional manual operation, it is possible to achieve a significant reduction of the number of the washing steps.

However, in the case of the above-mentioned fluidized bed apparatus 101, there occurs a problem in that it is not possible to wash the sealing surface (contact surface) of the airtight junctions 107 and 108 by typical automatic washing. Specifically, it is not possible to wash portions as they are, which are closely contacting with the U-seal 111 or the packing 117, and the flange 116, or the flanges 118 and 119 in the airtight junctions 107 and 108, because the washing liquid does not reach thereat. In this case, if the air tightness of the respective airtight junctions 107 and 108 is released through sucking of the compressed air, or lowering of the material container 105, the sealing surface may be exposed, and if the washing treatment is carried out in such a state, it is also possible to wash a sealing surface.

However, if the washing is carried out in a seal-released state, there is a fear in that washing liquid or products remained within the processing vessel 102 may expose (scattered) to outside the apparatus, thereby causing contamination of surrounding of the apparatus. In particular, in recent years, containment countermeasures are regarded as important in order to prevent drug-induced sufferings or disaster caused by product exposure in pharmaceutical manufacturing equipment. Accordingly, from the view point of the containment countermeasures, it is not preferred to carry out the washing treatment under the seal-released state. For this reason, in the conventional fluidized bed apparatus, after automatic washing within the processing vessel, it is necessary to disassemble the apparatus to subject the airtight junction to disassembly washing. As a result, although the washing treatment is automated, after all, it is reality that the number of washing steps itself is not reduced so much.

It is an object of the invention to provide a fluidized bed apparatus in which the sealing surface may be washed without disassembling the apparatus, and even during the washing, the products are free from exposing to the outside of the apparatus.

### Means for solving the problems

A fluidized bed apparatus of the present invention includes: a processing vessel including a plurality of units formed into a cylindrical shape; and an airtight junction provided between the units, for maintaining airtightness within the processing vessel, and is characterized in that: the airtight junction includes: a first seal portion formed so as to extend along a circumferential direction of the units; and a second seal portion provided radially on an outer side of the first seal portion, which is formed so as to extend along the circumferential direction of the units; and maintainance and release of the airtightness of at least the first seal portion of the first seal portion and the second seal portion is freely switchable.

According to the present invention, the first seal portion is provided to the airtight junction of the processing vessel including the plurality of units, and the second seal portion is arranged on an outer side of the first seal portion. Further, the maintainance and release of the airtightness of at least the first seal portion is configured to be freely switchable. As a result, during processing of the particulate material, the airtightness of the first seal portion is maintained, and on the other hand, while maintaining the airtightness of the second seal portion, the airtightness of the first seal portion may be released, thereby being capable of washing the processing vessel. For this reason, the sealing surface of the first seal portion may be washed without a problem of exposure, and the sealing surface may be subjected to automatic washing, which may not be achieved with the conventional apparatus, resulting in being capable of carrying out the washing treatment under a state in which products or materials are contained into the processing vessel.

In the above-mentioned fluidized bed apparatus, the airtight junction may have a structure including: a sealing member fitting portion, which is formed at an end of one of the units to be joined, and includes a first seal groove capable of receiving a first seal member constructing the first seal portion and a second seal groove capable of receiving a second seal member constructing the second seal; and a seal receiving portion, which is formed at an end of another of the units to be joined, and faces the sealing member fitting portion so that the first seal member and the second seal member are allowed to closely contact with.

Further, at least the first seal groove of the first seal groove and the second seal groove may be provided with an air supply port communicating with an inside of the groove, and the sealing member may be movably disposed within the groove through supply and exhaust of air via the air supply port. With this structure, the sealing member may be disposed freely so as to attain close contact with or detachment from the seal receiving portion, and it is possible to switch the maintainance and release of the airtightness of the seal portion freely.

Further, during processing of a particulate material, the fluidized bed apparatus maintains the airtightness of the at least the first seal portion of the first seal portion and the second seal portion; and during washing within the processing vessel, the fluidized bed apparatus releases the airtightness of the first seal portion while maintaining the airtightness of the second seal portion.

On the other hand, the processing vessel may have a structure including a filter casing unit in which filters for filtering processing gas are arranged; a spray casing unit in which spray nozzles for spraying liquid to an object of processing are arranged; a material container unit for containing the object of processing; and an air supply unit for supplying the processing gas to the material container; and in the airtight junction between the filter casing unit and the spray casing unit, maintainance and release of the airtightness of the first seal portion and the second seal portion may be both freely switchable.

Further, the processing vessel may have a structure including a filter casing unit in which filters for filtering processing gas are arranged; a spray casing unit in which spray nozzles for spraying liquid to an object of processing are arranged; a material container unit for containing the object of processing; and an air supply unit for supplying the processing gas to the material container; and in the airtight junction between the spray casing unit and the material container unit, maintainance and release of the airtightness of only the first seal portion may be freely switchable.

### Effect of the Invention

According to the fluidized bed apparatus of the present invention, in the fluidized bed apparatus including: the processing vessel including the plurality of units formed into a cylindrical shape; and the airtight junction provided between the units, for maintaining airtightness within the processing vessel, the airtight junction is provided with: the first seal portion formed so as to extend along the circumferential direction of the units; and the second seal portion provided radially on an outer side of the first seal portion, which is formed so as to extend along the circumferential direction of the units, and maintainance and release of the airtightness of at least the first seal portion of the first seal portion and the second seal portion is configured to be freely switchable. As a result, during the processing of the particulate material, the airtightness of the airtight junction is maintained by the first seal portion, and on the other hand, while maintaining the airtightness of the second seal portion, the airtightness of the first seal portion may be released, thereby being capable of washing the processing vessel. For this reason, the sealing surface of the first seal portion may be washed while maintaining the airtightness of the airtight junction by the second seal portion, and the sealing surface may be subjected to automatic washing, without the problem of exposure, under a state in which products or materials are contained into the processing vessel.

### Brief Description of the Drawings

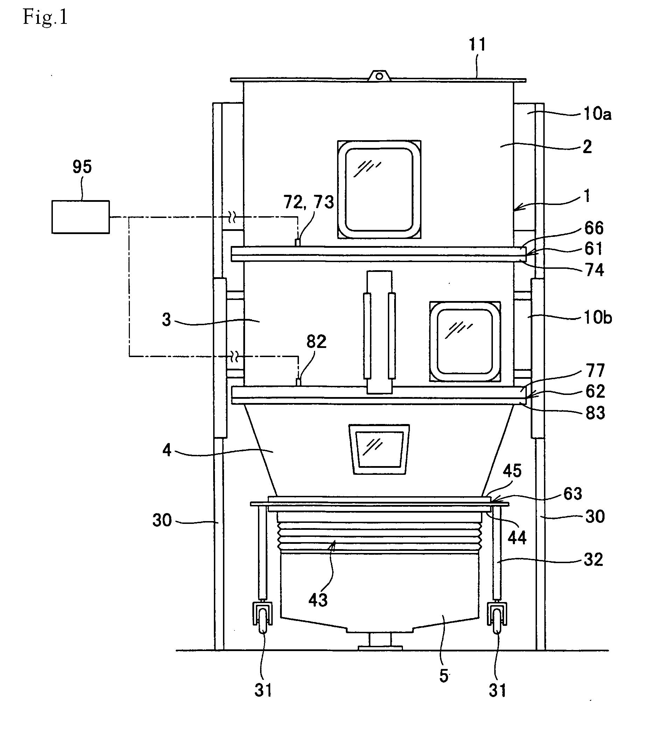

[FIG. 1] A frontal view illustrating an outer appearance of a fluidized bed apparatus according to one embodiment of the present invention.

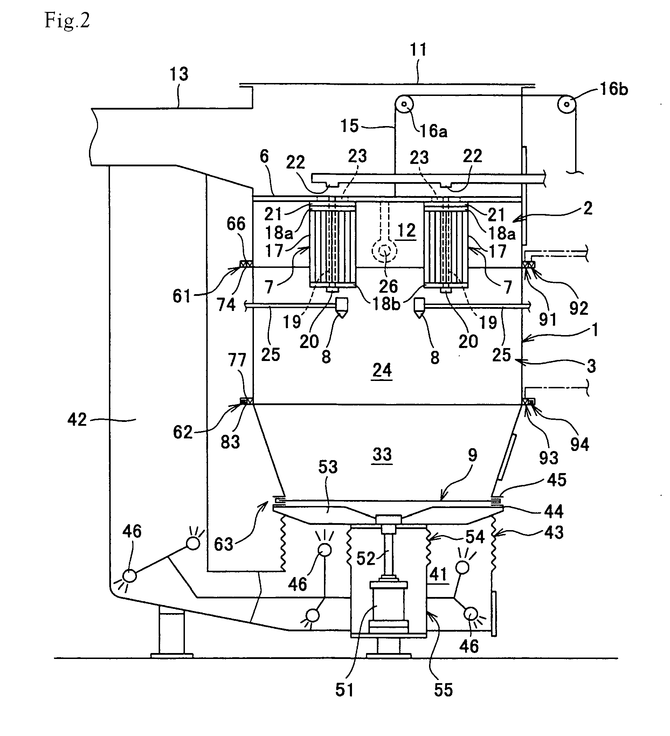

[FIG. 2] A cross-sectional view of the fluidized bed apparatus of FIG. 1.

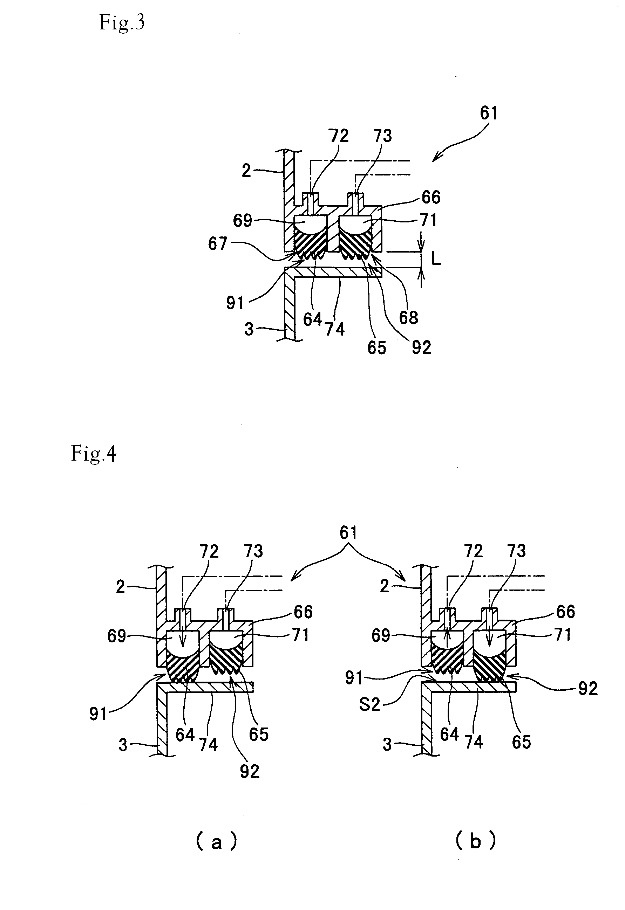

[FIG. 3] An explanatory drawing illustrating a structure of an airtight junction between a filter casing and a spray casing.
[FIG. 4] Part (a) is an explanatory drawing illustrating a state of processing a particulate material at the airtight junction of FIG. 3, and part (b) is an explanatory drawing illustrating a state at a time of washing.

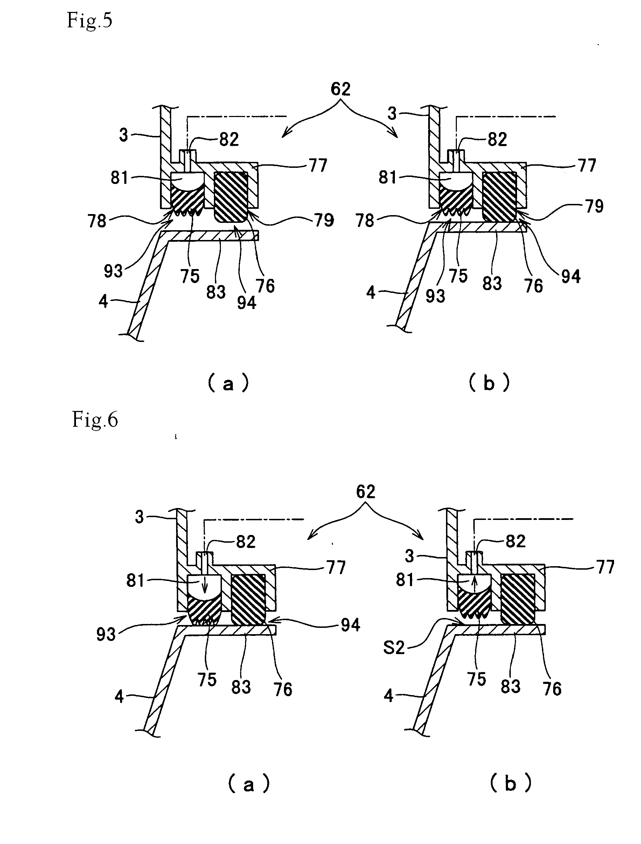

[FIG. 5] An explanatory drawing illustrating a structure of an airtight junction between a spray casing and a material container.
[FIG. 6] Part (a) is an explanatory drawing illustrating a state of processing the particulate material at the airtight junction of FIG. 5, and part (b) is an explanatory drawing illustrating a state during washing.

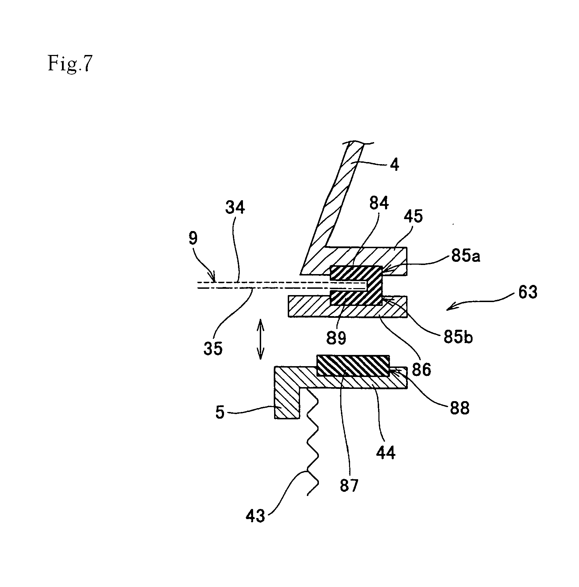

[FIG. 7] An explanatory drawing illustrating a structure of an airtight junction between the material container and an air supply unit.
[FIG. 8] An explanatory drawing illustrating a structure of a conventional fluidized bed apparatus.
[FIG. 9] An explanatory drawing illustrating a structure of an airtight junction between a filter casing and a spray casing of the conventional fluidized bed apparatus.
[FIG. 10] An explanatory drawing illustrating a structure of an airtight junction between the spray casing and a material container of the conventional fluidized bed apparatus.
[FIG. 11] An explanatory drawing illustrating a structure of an airtight junction between the material container and an air supply unit of the conventional fluidized bed apparatus.

### Description of Symbols

- 1: 1 processing vessel
- 2: filter casing (filter casing unit)
- 3: spray casing (spray casing unit)
- 4: material container (material container unit)
- 5: air supply unit
- 6: ceiling plate
- 7: 7 cartridge filters
- 8: spray nozzle
- 9: perforated plate
- 10a, 10b: brackets
- 11: roof
- 12: filter chamber
- 13: exhaust duct
- 15: wire
- 16a, 16b: pulley
- 17: filter member
- 18a, 18b: end cap
- 19: retainer
- 20: filter anchoring knob
- 21: rubber packing
- 22: pulse jet nozzles
- 23: aperture
- 24: fluidization chamber
- 25: spray arm
- 26: rotation nozzles
- 30: pole
- 31: wheel
- 32: carriage
- 33: material containing chamber
- 34: porous plate
- 35: support bracket
- 41: air supply chamber
- 42: air supply duct
- 43: bellows portion
- 44: flange
- 45: flange
- 46: fixed nozzle
- 51: pneumatic cylinder
- 52: rod
- 53: connecting arm
- 54: bellows portion
- 55: seal container
- 61: airtight junction
- 62: airtight junction
- 63: airtight junction
- 64: U-seal (first seal member)
- 65: U-seal (second seal member)
- 66: seal mounting portion
- 67: 67 seal groove (first seal groove)
- 68: seal groove (second seal groove)
- 69: cylinder chamber
- 71: cylinder chamber
- 72: air supply port
- 73: air supply port
- 74: flange (seal receiving portion)
- 75: U-seal (the first seal member)
- 76: fixing seal (second seal member)
- 77: seal mounting portion
- 78: seal groove (first seal groove)
- 79: seal groove (second seal groove)
- 81: cylinder chamber
- 82: air supply port
- 83: flange (seal receiving portion)
- 84: perforate seal
- 85a, 85b: seal accommodating grooves
- 86: perforated plate pressing fitting
- 87: fixing seal
- 88: seal accommodating grooves
- 89: recessed groove
- 91: seal portion (first seal portion)
- 92: seal portion (second seal portion)
- 93: seal portion (the first seal portion)
- 94: seal portion (second seal portion)
- 95: supply and exhaust means 101 fluidized bed apparatus
- 102: processing vessel
- 103: filter casing
- 104: spray casing
- 105: material container
- 106: air supply unit
- 107: airtight junction
- 108: airtight junction
- 109: airtight junction
- 111: U-seal
- 112: seal mounting portion
- 113: seal groove
- 114: cylinder chamber
- 115: air supply port
- 116: flange
- 117: silicone sponge packing
- 118: flange
- 119: flange
- 121: actuator
- 122: silicone sponge packing
- 123: packing
- 124: flange
- 125: flange
- 126: perforated plate
- 127: porous plate
- 128: reinforcing plate
- S1: seal portion
- S2: seal portion

### Best Mode for carrying out the Invention

Embodiment of the present invention is now described in detail with reference to the drawings. FIG. 1 is a frontal view illustrating an outer appearance of a fluidized bed apparatus according to an embodiment of the present invention. FIG. 2 is a cross-sectional view of the fluidized bed apparatus of FIG. 1. The fluidized bed apparatus of FIG. 1 includes a processing vessel 1 having a cylindrical shape, and is used for, for example, carrying out a coating processing on a surface of a particulate material. As illustrated in FIG. 1, the processing vessel 1 is formed by sequentially overlaying from its top a filter casing (filter casing unit) 2, a spray casing (spray casing unit) 3, a material container (material container unit) 4, and an air supply unit 5.

The filter casing 2 and the spray casing 3 are fixed and supported to poles 30 by brackets 10a and 10b. Further, between the filter casing 2 and the spray casing 3, between the spray casing 3 and the material container 4, and between the material container 4 and the air supply unit 5 are airtightly engaged, respectively, with airtight junctions 61 to 63 using a ring shape sealing member. Within the filter casing 2, a ceiling plate 6 is arranged, and cartridge filters 7 are fitted to the ceiling plate 6. Within the spray casing 3, spray nozzles 8 are arranged for spraying a binder solution or a coating solution to the particulate material. The particulate material being an object of processing is charged into the material container 4, and at a bottom of the material container 4, a perforated plate 9 for holding the particulate material is disposed.

Top end of the filter casing 2 is closed by a roof 11, and a filter chamber 12 is formed in an inside of the filter casing 2. An exhaust duct 13 communicating outside air is coupled to the filter chamber 12. The disk-shaped ceiling plate 6 is contained in the filter chamber 12. A peripheral edge of the ceiling plate 6 is brought into contact with an inner surface of the filter casing 2, and a wire 15 is fitted at an end thereof to an upper surface of the ceiling plate. The wire 15 is drawn out to an outside of the apparatus through pulleys 16a and 16b. The other end of the wire 15 is connected to a pulley (not shown) driven by a motor. Owing to the wire 15, the ceiling plate 6 is vertically movable within the filter casing 2 and the spray casing 3.

A filter member 17 formed of a nonwoven fabric made of polyester is used for the cartridge filters 7. End caps 18a and 18b made of stainless are fitted to upper and lower ends of the filter member 17, respectively. A retainer 19 made of stainless is inserted into a center of the filter member 17. Upper end of the retainer 19 is fixed to the ceiling plate 6, and a filter anchoring knob 20 is fitted to a lower end of the retainer 19. The filter member 17 is fixed to the ceiling plate 6 by cramping the filter anchoring knob 20 using the retainer 19 as a guide. A rubber packing ring 21 is interposed between the end cap 18a and the ceiling plate 6.

Pulse jet nozzles 22 for injecting pulsated air for backwashing are further arranged to the filter casing 2. In the ceiling plate 6, apertures 23 are formed so as to face centers of the filter member 17. The pulse jet nozzles 22 are arranged above the apertures 23. The pulse jet nozzles 22 are communicated to a pulsated air supply source (not shown) to inject pulsated air into the inside of the respective filters 7. With this, a so-called backwashing process is executed to blow off the particulate material adhering to the filter members 17.

The spray casing 3 is joined to the filter casing 2 in an airtight state by means of airtight junction 61. Inside the filter casing 2, a fluidization chamber 24 also serving as a spraying chamber is formed. Within the fluidization chamber 24, the spray nozzles 8 are arranged. The binder solution or the coating solution is supplied to the spray nozzles 8 through a tube (not shown) from a pump provided outside the apparatus. The spray nozzles 8 are fitted to spray arms 25, and the spray arms 25 are slidably fitted to the poles 30. With this structure, the spray nozzles 8 are appropriately vertically movable within the spray casing 3. Further, within the spray casing 3, rotation nozzles 26 for the automatic washing are disposed so as to be vertically movable. High-pressure water is fed to the rotation nozzles 26 by a washing pump unit provided outside the apparatus. Through vertical movement and rotation of the rotation nozzles 26, residues adhered to an inner wall of the processing vessel 1 may be completely washed away.

The material container 4 is a barrel having a reversed truncated cone shape having a gradually reducing diameter downwardly. The material container 4 is airtightly fitted to the lower end of the spray casing 3 via the airtight junction 62. The material container 4 is fitted to a carriage 32 provided with wheels 31 for traveling, thereby being freely movable on a floor. Inside the material container 4, there is formed a material containing chamber 33. Below the material container 4, the perforated plate 9 having permeability is provided. For the perforated plate 9, a tatami-woven wire mesh such as 42×175 mesh, 32×132 mesh, or 24×110 mesh is generally used. The perforated plate 9 is constructed of a porous plate 34 formed by superposing a punching plate and a plain woven metal mesh for reinforcing the perforated plate, and support bracket 35 made of stainless for supporting the porous plate 34. The particulate material, which is charged into the material containing chamber 33, is held on the perforated plate 9.

The air supply unit 5 having an air supply chamber 41 inside thereof is installed below the container 4. The air supply unit 5 is communicated to an air supply duct 42 communicating with the air supply chamber 41. The air supply duct 42 is communicated to an air supply source (not shown) arranged outside the apparatus. Further, a bellows portion 43 vertically extensible and a flange 44 having a ring shape and fitted to an upper end of a bellows portion 43 are provided to an upper portion of the air supply unit 5. The flange 44 is joined with a flange 45 provided at a lower end of the material container 4 by a cramping member (not shown). Within the air supply chamber 41, also, fixed nozzles 46 for washing inside the chamber are arranged. High-pressure water from the above-mentioned washing pump unit is supplied to the fixed nozzles 46, too, to carry out the washing within the air supply unit 5, the lower surface side of the perforated plate 9, or the like.

Within the air supply chamber 41, a pneumatic cylinder 51 is further provided. At a leading end of a rod 52 of the pneumatic cylinder 51, a plurality of connecting arms 53 extending in a radial direction are fitted. Outer peripheries of the connecting arms 53 are coupled to the flange 44, and in association with an operation of the pneumatic cylinder 51, the flange 44 moves vertically. The pneumatic cylinder 51 and the rod 52 are contained in a seal container 55 including a bellows portion 54. With the seal container 55, the pneumatic cylinder 51 is arranged in a state being shielded with respect to the air supply chamber 41.

In the fluidized bed apparatus, when the pneumatic cylinder 51 is activated to lower the flange 44, the wheels 31 of the material container 4 are brought into contact with a floor, and the carriage 32 are brought into a travel possible state. With this, the material container 4, in which processing of the particulate material is completed, may be carried out, or the material container 4, into which unprocessed particulate material is charged, may be carried in. On the other hand, if the material container 4 is carried in-between the spray casing 3 and the air supply unit 5, and the pneumatic cylinder 51 is activated under such a state to elevate the flange 44, the material container 4 is pushed up. With this operation, the airtight junction 62 is brought into close contact state, and the spray casing 3 and the material container 4 are joined airtightly. Further, when the material container 4 is pushed up, the airtight junction 63 is also brought into close contact state. A fixing seal (fixing seal 87; refer to FIG. 7) is provided to the flange 44 of the air supply unit 5, and hence the material container 4 and the air supply unit 5 are joined airtightly.

In such fluidized bed apparatus described above, if fluidizing air is supplied from the air supply duct 42 to the air supply chamber 41, the fluidizing air flows into the material containing chamber 33 through the perforated plate 9. With this operation, the particulate material in the chamber 33 is blown up, and is brought into a fluidized state in the material containing chamber 33 and the fluidization chamber 24. Then, in this state, by spraying a binder solution or a coating solution as appropriate from the spray nozzles 8, a process of coating the particulate material is executed. Note that, the gas, which has brought the particulate material into the fluidized state, is discharged through the exhaust duct 13 after removal and cleaning of fine solid particles through the cartridge filters 7.

On the other hand, from the view points of good manufacturing practice (GMP), etc., it is necessary to wash an inside of the processing vessel 1 in the fluidized bed apparatus, as appropriately after the coating processing is carried out for a give period of time. The washing treatment is automatically carried out using rotation nozzles 26 and a fixed nozzle 46, and the residues adhered to the inner wall of the processing vessel 1 are washed away with high-pressure water. In this case, in the conventional fluidized bed apparatus, it is impossible to wash the sealing surface of the airtight junctions 61 and 62 through the automatic washing, as described above. Accordingly, after the washing treatment, the respective units are disassembled to wash the sealing surface as a separate operation. In this case, if the airtightnesses of the airtight junctions 61 and 62 are released to carry out the washing treatment, the product exposure occurs and the containment may not be attained as has already been discussed.

Contrary to this, in the fluidized bed apparatus of the present invention, a particular structure is adopted for the airtight junctions 61 and 62 to achieve the washing of the sealing surface at the same time during the automatic washing. As a result, the containment and reduction of the number of washing steps are attained at the same time by omitting complicate disassembly washing. FIG. 3 to 7 are explanatory drawings illustrating the structures of the airtight junctions 61 to 63, in which FIGS. 3 and 4 illustrate the structure of the airtight junction 61, FIGS. 5 and 6 illustrate the structure of the airtight junction 62, and FIG. 7 illustrates the structure of the airtight junction 63, respectively.

As illustrated in FIG. 3, in the airtight junction 61, two seal portions 91 and 92 (first and second seal portions) are provided inner side and outer side thereof. In the seal portions 91 and 92, two U-seals (first and second seal members) 64 and 65 made of silicon, a urethane resin, or the like are used. At an outer periphery of a lower end portion of the filter casing 2, a seal mounting portion 66 is formed so as to extend toward a radial direction. Inside the seal mounting portion 66, two seal grooves 67 and 68 (first and second seal grooves) are formed radially in parallel. Within the seal grooves 67 and 68, the U-seals 64 and 65 are accommodated, respectively. At the rear of the U-seals 64 and 65 within the seal grooves 67 and 68, cylinder chambers 69 and 71 are formed, respectively. Air supply ports 72 and 73 are provided to the cylinder chambers 69 and 71, and are communicated to a supply and exhaust means 95 outside the apparatus. On the other hand, at an outer periphery of an upper end of the spray casing 3, a flange (seal receiving portion) 74 is formed so as to extend toward a radial direction. A top surface of a flange 74 is arranged so as to face a lower surface side of the seal mounting portion 66.

In such airtight junction 61 descried above, if compressed air is supplied to the cylinder chambers 69 and 71, due to a pressing force of the compressed air, the U-seals 64 and 65 move downward within the seal grooves 67 and 68. With this movement, the U-seals 64 and 65 protrude from the lower end of the seal mounting portion 66, and the lower ends of the U-seals 64 and 65 abut against the top surface of the flange 74. With this operation, the airtight junction 61 is laid in the airtight state, to thereby seal between the filter casing 2 and the spray casing 3. Contrary to this, when the air is sucked from the cylinder chambers 69 and 71, the U-seals 64 and 65 are drawn within the seal grooves 67 and 68 to move upward. With this movement, the lower ends of the U-seals 64 and 65 are detached from the top surface of the flange 74, thereby releasing the airtight state of the airtight junction 61. Note that, the filter casing 2 and the spray casing 3 are fixed and supported to the poles 30, and hence a distance L between the lower end of the seal mounting portion 66 and the top surface of the flange 74 is held at a constant. Consequently, the airtightness of the airtight junction 61 may freely be controlled through an appearance and disappearance of the U-seals 64 and 65.

On the other hand, in the airtight junction 61, the respective U-seals 64 and 65 are individually operable. In the fluidized bed apparatus, by properly using the U-seals 64 and 65 between during the particulate material processing and during the washing, the washing of the sealing surface is effected without exposure. FIG. 4(a) is an explanatory drawing illustrating a state of the airtight junction 61 during the particulate material processing, and FIG. 4(b) is an explanatory drawing illustrating a state of the airtight junction 61 during the washing. As illustrated in FIG. 4(a), during the particulate material processing, air is supplied to a cylinder chamber 69 to bring an inner side U-seal 64 into close contact with the flange 74. With this operation, the airtight junction 61 is laid in the airtight state, and in this state, the particulate material processing is executed. Note that, in this case, an outer side U-seal 65 may be brought into close contact with the flange 74 by supplying the air also to a cylinder chamber 71,

After that, in a case where the washing treatment is carried out after completion of the particulate material processing, first, in a state shown in FIG. 4(a), the washing within the processing vessel 1 is once carried out to wash a side surface of the U-seal 64 facing within the vessel. Next, the outer side U-seal 65 is brought into close contact with the flange 74 by supplying the air to the cylinder chamber 71. Note that, there is no need to carry out this step in a case where the U-seal 65 is brought into close contact with the flange 74 from the time of the particulate material processing. Further, after bringing the U-seal 65 into close contact with the flange 74, there may carry out the washing of the inner side surface of the U-seal 64. Then, in this state, the inside of the cylinder chamber 69 is subjected to sucking, to thereby draw up the U-seal 64. With this operation, as illustrated in FIG. 4(b), portions S1 (top surface of flange 74 and lower surface of U-seal 64), which serve as the sealing surfaces during the particulate material processing, are brought into exposed states. At this time, the outer side U-seal 65 has already been brought into close contact with the flange 74, and hence the airtight of the airtight junction 61 is maintained. For this reason, even if the U-seal 64 is drawn up, the problem of product exposure does not occur.

Therefore, the airtight junction 61 is kept in the state illustrated in FIG. 4(b), and the above-mentioned automatic washing processing is carried out. At this time, cleaning water, residues within the vessel, etc. are sealed with the U-seal 65, whereby scattering thereof outside the apparatus does not occur. Further, in this case, the seal portions S1 are also subjected to washing at the same time, and hence the washing of the sealing surface may be carried out without exposure, which is not impossible to carry out in the conventional apparatus. Note that, the washing within the processing vessel 1 was once carried out under the state illustrated in FIG. 4(a), and hence the washing of the U-seal 64 may be carried out without exposure. Consequently, even in a case of processing drugs or toxic substances, the washing treatment may be carried out under a state in which products, materials, etc., are contained into the processing vessel 1, thereby being extremely useful as containment countermeasures.

Next, even in the airtight junction 62, as illustrated in FIG. 5, two seal portions 93 and 94 (first and second seal portions) are provided to an inner side and an outer side. In the seal portions 93 and 94, a U-seal (first seal member) 75 and a fixing seal (second seal member) 76 having an angular cross section are used. At an outer periphery of a lower end portion of the spray casing 3, a seal mounting portion 77 is formed so as to extend toward a radial direction. Inside of the seal mounting portion 77, two seal grooves (first and second seal grooves) 78 and 79 are formed radially in parallel. Within the seal groove 78, the U-seal 75 is received, and within the seal groove 79, the fixing seal 76 is received, respectively.

At a rear of the U-seal 75 within the seal groove 78, a cylinder chamber 81 is formed as well as the airtight junction 61. Within the cylinder chamber 81, an air supply port 82 is provided to be communicated with a supply and exhaust means 95 provided outside the apparatus. Contrary to this, within the seal groove 79, the fixing seal 76 made of elastomer such as silicon and a urethane resin is fitted. On the other hand, at an outer periphery of an upper end of the material container 4 a flange (seal receiving portion) 83 is formed so as to extend toward a radial direction. A top surface of the flange 83 is arranged so as to face a lower surface side of the seal mounting portion 77.

In the airtight junction 62 described above, a lower end surface of the fixing seal 76 always protrudes at a given amount from a lower end of the seal mounting portion 77. On the other hand, if the compressed air is supplied to the cylinder chamber 81, the U-seal 75 protrudes from a lower end of the seal groove 78 downwardly owing to a pressing force of the compressed air as well as the airtight junction 61. In the airtight junction 62, the material container 4 is pushed up with the pneumatic cylinder 51 as illustrated in FIGS. 5(a) and 5(b), the top surface of the flange 83 abuts against the lower end surface of the fixing seal 76. With this, the airtight junction 62 is laid in the airtight state, and the spray casing 3 and the material container 4 are joined airtightly.

Even in the airtight junction 62, by appropriately changing a state of the U-seal 75, the washing of the sealing surface is realized without exposure. FIG. 6(a) is an explanatory drawing illustrating a state of the airtight junction 62 during the particulate material processing, and FIG. 6(b) is an explanatory drawing illustrating the state of the airtight junction 62 during the washing. As illustrated in FIG. 6(a), during the particulate material processing, air is supplied to the cylinder chamber 81 to bring the U-seal 75 into close contact with the flange 83, and the particulate material processing is executed in this state. Then, in a case where the washing treatment is carried out after completion of the particulate material processing, the washing within the processing vessel 1 is once carried out in a state shown in FIG. 6(a), to thereby wash an inner side surface of the U-seal 75. After that, the inside of the cylinder chamber 81 is subjected to sucking, to thereby draw up the U-seal 75. With this operation, as illustrated in FIG. 4(b), portions S2 (top surface of flange 83 and lower surface of U-seal 75), which serve as the sealing surfaces during the particulate material processing, are brought into exposed states. At this time, the outer side fixing seal 76 has is brought into close contact with the flange 83, and hence the airtight of the airtight junction 62 is maintained. For this reason, even if the U-seal 75 is drawn up, the problem of product exposure does not occur.

Therefore, the airtight junction 62 is kept in the state illustrated in FIG. 6(b), and the above-mentioned automatic washing processing is carried out. At this time, cleaning water, residues within the vessel, etc. are sealed with the U-seal 76, whereby scattering thereof outside the apparatus does not occur. Further, in this case, the seal portions S2 are also subjected to washing at the same time, and hence the washing of the sealing surface may be carried out without exposure. Further, in this case, too, the washing within the processing vessel 1 was once carried out under the state illustrated in FIG. 6(a), and hence the washing of the U-seal 75 may be carried out without exposure. Consequently, the washing treatment may be carried out under a state in which products, materials, etc., are contained into the processing vessel 1 as well as the aforementioned. Note that, it is not necessary to carry out the washing of the airtight junctions 61 and 62 individually, whereby it is possible to simultaneously wash the both airtight junctions 61 and 62. Specifically, a step involving carrying out the washing once under the states illustrated in FIGS. 4(a) and 6(a), and after that bringing the airtight junctions 61 and 62 into the states illustrated in FIGS. 4(b° and 6(b) to carry out the washing of the seal portion S1 and S2 may be executed at the same time by the same washing step.

Further, in the fluidized bed apparatus of the present invention, some ideas are incorporated into the airtight junction 63, and hence inflow of the air within the chamber and exposure of the products during the particulate material processing, and product exposure during the apparatus washing may be effective prevented from occurring. As illustrated in FIG. 7, in the airtight junction 63, a perforate seal 84 having a U-shape in cross-section is used. At the lower end of the material container 4, the flange 45 is provided, and on the lower surface side of the flange 45, the seal accommodating groove 85a is formed. Further, on the lower surface side of the perforate seal 84, a ring-shape perforated plate pressing fitting 86 is arranged, and on a top surface of the perforated plate pressing fitting 86, a seal accommodating groove 85b is formed. The perforate seal 84 is received within the seal accommodating grooves 85a and 85b. In this state, between the flange 45 and the perforated plate pressing fitting 86 is secured with a clamp (not shown).

On the other hand, on a top surface side of the flange 44 provided on the air supply unit 5 side, the fixing seal 87 is fitted. The fixing seal 87 is received within a seal accommodating groove 88 on the flange 44. If the pneumatic cylinder 51 is activated and the air supply unit 5 is pushed up, the fixing seal 87 is brought into press-contact with the perforated plate pressing fitting 86. As described above, between the flange 45 and the perforated plate pressing fitting 86 are fixed airtightly through the intermediation of the perforate seal 84. Consequently, through the close contact between the fixing seal 87 and the perforated plate pressing fitting 86, the airtight junction 63 is joined airtightly.

In the airtight junction 63, the perforated plate 9 constructed of the porous plate 34 and the support bracket 35 is sandwiched by the recessed groove 89 of the perforate seal 84. In this case, in the conventional fluidized bed apparatus, the airtight junction between the material container 4 and the air supply unit 5 has a structure as illustrated in FIG. 11, and hence the end surface of the perforated plate inevitably faces outside the apparatus. For this reason, there is such a risk that minute leakage may occur at an outer end portion of the perforated plate, thereby causing the inflow of the room air within the chamber, the product exposure, or the like. Contrary to this, in the fluidized bed apparatus of the present invention, the perforate seal 84 having a U-shape cross-section is adopted for the airtight junction 63, and such a structure that the perforated plate 9 is received within the recessed groove 89 is taken. As a result, the perforated plate 9 is sealed to the end surface thereof, whereby there occurs no leakage at the outer end portion of the perforated plate 9. Consequently, the airtightness of the airtight junction 63 is enhanced, thereby being capable of effectively preventing the inflow of the room air within the chamber, and the product exposure from occurring.

It should be noted that the present invention is not limited to the above-mentioned embodiment, and may be modified without departing from the gist of the present invention.
For example, in the above-mentioned embodiment, the fluidized bed apparatus for subjecting the particulate material to the coating processing is described. However, the present invention may also be adapted to an apparatus for granulating the particulate material or an apparatus for drying the particulate material. Further, in the above-mentioned embodiment, though there is employed a structure in which the fixing seal 76 is provided to the outer side in the airtight junction 62, the U-seal may be provided to the outer side as well as the airtight junction 61. However, the airtight junction 62 adopts a structure in which the airtight junction is formed by pushing up the material container 4, and hence in order to appropriately secure a clearance for vertical movement of the U-seal 75, it is preferred that the outer side seal be the fixing seal. On the other hand, even in respect to the airtight junction 61, the fixing seal may be adopted for the outer side. In this case, however, when the fluidized bed apparatus is set to a state being capable of carrying out the processing, the fixing seal is interposed between the filter casing 2 and the spray casing 3. For this reason, compared to a case where non-contact clearance L exists, there is a fear of resulting in being hard to handle the apparatus, and hence it is preferred that the U-seals be used for both side.

Further, in the above-mentioned fluidized bed apparatus, as the automatic washing apparatus, there is exemplified one in which the rotation nozzles 26 and the fixed nozzle 46 are adopted, but the washing means is not limited thereto, and there may be adopted the structure in which an ultrasonic washing apparatus or a bubbling apparatus is arranged within the processing vessel 1 to carry out the washing within the vessel by means of water reserving wash.

## Claims

1. A fluidized bed apparatus, comprising:
a processing vessel including a plurality of units formed into a cylindrical shape; and
an airtight junction provided between the units, for maintaining airtightness within the processing vessel,
wherein:
the airtight junction comprises: a first seal portion formed so as to extend along a circumferential direction of the units; and a second seal portion provided radially on an outer side of the first seal portion, which is formed so as to extend along the circumferential direction of the units; and
maintainance and release of the airtightness of at least the first seal portion of the first seal portion and the second seal portion is freely switchable.

2. A fluidized bed apparatus according to claim 1, wherein the airtight junction comprises:
a sealing member fitting portion, which is formed at an end of one of the units to be joined, and includes a first seal groove capable of receiving a first seal member constructing the first seal portion and a second seal groove capable of receiving a second seal member constructing the second seal; and
a seal receiving portion, which is formed at an end of another of the units to be joined, and faces the sealing member fitting portion so that the first seal member and the second seal member are allowed to closely contact with.

3. A fluidized bed apparatus according to claim 2, wherein at least the first seal groove of the first seal groove and the second seal groove is provided with an air supply port communicating with an inside of the seal groove, and the sealing member is movably disposed within the groove through supply and exhaust of air via the air supply port.

4. A fluidized bed apparatus according to claim 1, wherein:
during processing of a particulate material, the fluidized bed apparatus maintains the airtightness of the at least the first seal portion of the first seal portion and the second seal portion; and
during washing within the processing vessel, the fluidized bed apparatus releases the airtightness of the first seal portion while maintaining the airtightness of the second seal portion.

5. A fluidized bed apparatus according to claim 1, wherein:
the processing vessel comprises a filter casing unit in which filters for filtering processing gas are arranged; a spray casing unit in which spray nozzles for spraying liquid to an object of processing are arranged; a material container unit for containing the object of processing; and an air supply unit for supplying the processing gas to the material container; and
in the airtight junction between the filter casing unit and the spray casing unit, maintainance and release of the airtightness of the first seal portion and the second seal portion is both freely switchable.

6. A fluidized bed apparatus according to claim 1, wherein:
the processing vessel comprises a filter casing unit in which filters for filtering processing gas are arranged; a spray casing unit in which spray nozzles for spraying liquid to an object of processing are arranged; a material container unit for containing the object of processing; and an air supply unit for supplying the processing gas to the material container; and
in the airtight junction between the spray casing unit and the material container unit, maintainance and release of the airtightness of only the first seal portion is freely switchable.
